# EUROPEAN PATENT SPECIFICATION

(11) **EP 4 457 574 B1**
(45) Date of publication and mention of the grant of the patent: **20.05.2026**
(21) Application number: 21847978.0
(22) Date of filing: 31.12.2021
(51) Int. Cl.: G05D 7/01

(54) **A PRESSURE-INDEPENDENT CONTROL VALVE WITH A DRAIN, AND METHOD OF DRAINING THE VALVE**
DRUCKUNABHÄNGIGES STEUERVENTIL MIT EINEM ABLAUF UND VERFAHREN ZUM ABLASSEN DES VENTILS
SOUPAPE DE RÉGULATION INDÉPENDANTE DE LA PRESSION DOTÉE D'UN DRAIN ET PROCÉDÉ DE VIDANGE DE LA SOUPAPE

(43) Date of publication of application: 06.11.2024
(73) Proprietor: Pittway Sarl, 1180 Rolle (CH)
(72) Inventor: SVEJNOHA, Petr, 1180 Rolle (CH); FADRNY, Petr, 1180 Rolle (CH); GOYAL, Ashishkumar, 1180 Rolle (CH)
(74) Representative: Murgitroyd & Company
(86) International application number: PCT/EP2021/087903
(87) International publication number: WO 2023/126067

(56) References cited:
- WO-A1-2020/183258
- US-A1- 2013 206 242

## Description

### Field of invention

The invention relates to pressure-independent control valves having a drain, and to the draining of said valves.

### Background

Pressure-independent control valves (PICVs) can regulate a flow of fluid, and keep it constant, even during variable pressure conditions. PICVs are commonly used in fluid systems such as, for example, in heating, ventilation and air conditioning (HVAC) systems for controlling the flow of fluid through the conduits of the system. For example, a PICV may be used in a HVAC fluid system to control the flow of water through a conduit in order to provide heating or cooling.

PICVs typically comprise a fluid inlet where the fluid has a pressure P1, a fluid outlet where the fluid has a pressure P3, and a fluid path extending between the fluid inlet and the fluid outlet where the fluid has a pressure P2. The pressure differs through the valve whereby P1>P2>P3.

PICVs comprise a pressure differential control to maintain a constant pressure difference, and thereby maintain a constant flow rate of fluid regardless of any changes in pressure.

During installation and/or during use, undesirable solid debris may collect within the PICV and impair the operation of the PICV.

One way of cleaning the PICV of debris involves removing the PICV from the fluid system and conducting a cleaning process remotely from the fluid system. However, this cleaning process results in undesirable downtime and disrupts the operation of the fluid system. The removal and re-positioning of the cleaned PICV requires the re-commissioning of the fluid system which is complex and time-consuming.

US2013206242A1 and WO2020183258A1 can be regarded as useful to understand the invention.

### Summary

The invention seeks to address and/or ameliorate the problems of pressure independent control valves described above.

According to the present disclosure there is provided a pressure independent control, a method of draining a pressure independent control valve, and a fluid system, as described in the accompanying claims.

A first aspect of the invention relates to a pressure independent control valve comprising a drain to allow for the draining of fluid from the valve.

Advantageously, the draining of fluid from the valve allows for the removal of debris within the valve. By removing the debris, the risk of the debris impairing the operation of the valve is minimised, preferably avoided.

Advantageously, the drain allows for the draining of fluid from the valve whilst the valve is arranged in-situ within a fluid system, such as for example within an HVAC system.

The valve comprises:
a fluid inlet,
a fluid outlet,
a fluid path between the fluid inlet and the fluid outlet,
a pressure differential control, whereby the pressure differential control comprises a first chamber in fluid communication with the fluid path;
a drain comprising:
   a drain outlet in fluid communication with the first chamber, and
   a drain closure to open and close the drain outlet.

When the drain outlet is open, fluid can drain from the valve. When the drain outlet is closed, no draining of fluid can occur. By arranging the drain outlet in fluid communication with the first chamber, the drain outlet is also in fluid communication with the fluid path via the first chamber. As such, the configuration of the drain outlet allows for fluid to be diverted from the fluid path to drain from the valve. The draining fluid is able to carry debris from the valve and has a flushing action.

The drain closure is movable between an open position to open the drain outlet, and a closed position to close the drain outlet.

The drain closure may be movable to the open position, whereby the drain closure is removed from the drain outlet.

The drain closure may be movable to the open position, whereby the drain closure is arranged at a spaced distance from the drain outlet.

The drain closure may be movable within the drain outlet between the open position and the closed position.

The drain closure may be configured to be manually movable by a user between the open position and closed position. Advantageously, this allows the user to manually drain the valve as desired.

The drain may comprise an actuator to move the drain closure between the open position and the close position. Advantageously, the actuator allows for automated movement of the drain closure when the user is remote from the valve.

The drain closure may comprise a cover, door, cap, lid, plug, or screw or any other suitable type of closure for opening and closing the drain outlet.

The drain closure may be movable by any suitable moving action between the open position and closed position. For example, the drain closure may be movable by a sliding action, rotational action, pivoting action, pushing and pulling action, raising and lowering action or any other suitable moving action for opening and closing the drain outlet.

When the drain closure is movable within the drain outlet, the drain may comprise one or more retainer configured to retain the drain closure within the drain outlet. As such, the retainer may retain the drain closure within the drain outlet when in the open position. Advantageously, the retainer avoids the need to remove of the drain closure from the drain outlet to open the drain outlet, and thereby avoids the risk of losing the drain closure. Advantageously, the retainer inhibits the movement of the drain closure beyond the defined open position, and thereby avoids the risk of moving the drain closure too far.

The drain outlet may comprise one or more drain outlet aperture. As such, the drain closure is movable between the open position to open the one or more drain outlet aperture and the closed position to close the one or more drain outlet aperture.

The drain outlet may comprise a drain outlet channel extending from the first chamber to the one or more drain outlet aperture.

When the drain closure is movable in the drain outlet, the drain closure may be movable within the drain outlet channel between the open position and the closed position.

The one or more drain outlet aperture may be formed in the drain closure. As such, when the one or more drain closure is in the open position the drain outlet aperture may be arranged externally to the drain outlet channel and thereby open. When the drain closure is in the closed position the one or more drain outlet aperture may be arranged internally within the drain outlet channel and thereby closed.

The drain outlet may be configured to allow fluid to drain from the valve under gravity.

The valve may have a fluid control operational mode wherein the drain outlet is closed and the valve is thereby configured to control the flow of fluid through the fluid inlet and the fluid outlet.

The valve may have a draining operational mode wherein the drain outlet is open to allow fluid to drain through the open drain outlet. Advantageously, the draining fluid flushes debris from the valve.

In an embodiment, the valve may have a forward draining mode wherein the drain outlet is open position and the valve is configured to allow fluid to enter the valve through the fluid inlet. As such, fluid is able to flow in a forward direction through the fluid inlet, along the fluid path and at least a portion of the fluid drains out through the open drain outlet to "forward flush" the valve. The valve may comprise a fluid outlet closure configured to close the fluid outlet when the valve is in the forward draining mode. The fluid outlet closure may be housed in a valve body, or arranged external to the valve body.

In an embodiment, the valve may have a backward draining mode wherein the drain closure is configured in the open position and the valve is configured to allow fluid to enter through the fluid outlet. As such, fluid is able to flow in a backwards direction (opposite to the forward direction) through the fluid outlet, along the fluid path and at least a portion of the fluid drains out through the drain outlet to "back flush" the valve. The valve may comprise a fluid inlet closure configured to close the fluid inlet when valve is in the back draining mode. The fluid inlet closure may be housed in a valve body, or arranged external to the valve body.

A second aspect of the invention relates to a fluid system comprising:
a pressure-independent control valve according to the first aspect of the invention;
a first fluid pipe coupled to the fluid inlet of the valve; and
a second fluid pipe coupled to the fluid outlet of the valve.

A third aspect of the invention relates to a method of draining a pressure-independent control valve according to the first aspect of the invention comprising the step of: moving the drain closure to the open position to open the drain outlet such that fluid is can drain through the drain outlet.

The method may comprise the step of:
when the valve is operating in the forward draining mode, directing fluid through the fluid inlet to the fluid path.

The method may further comprise the step of:
when the valve is operating in the forward draining mode, configuring the fluid outlet closure to close the fluid outlet.

Alternatively, the method may comprise the step of:
when the valve is operating in the back draining mode, directing a flow of fluid through the fluid outlet to the fluid path.

The method may further comprise the step of:
when the valve is operating in the back draining mode, configuring the fluid inlet closure to close the fluid inlet.

### Brief description of the drawings

For a better understanding and to show how it may be carried into effect, reference will now be made, by way of example only, to the accompanying drawings, in which:
Figure 1 is an external view of an embodiment of a pressure independent controlled valve according to the present invention;
Figure 2 is a cross-sectional view of the embodiment of the valve according to the present invention, wherein the valve is operating in a flow control mode and a drain is closed;
Figures 3a to 3c are cross sectional views of the embodiment of the valve according to the present invention, wherein the valve is operating in a forward draining mode and the drain is open;
Figures 4a and 4b are cross sectional views of the embodiment of the valve according to the present invention, wherein the valve is operating in a back draining mode and the drain is open;
Figures 5a and 5b are cross-sectional views of the embodiment of the valve according to the present invention, wherein the valve is operating in a forward draining mode and the drain is open;
Figure 6 is a cross-sectional view of the embodiment of the valve according to the present invention, wherein the drain is closed;
Figure 7 is an enlarged view of the drain closure.

### Detailed description

Features described in the following detailed description can be combined to arrive at specific embodiments not explicitly described herein.

The same reference numbers in the drawings designate the same or corresponding elements.

Throughout the detailed description, the terms "valve" and "pressure-independent control valve", and the abbreviation "PICV" are used interchangebly.

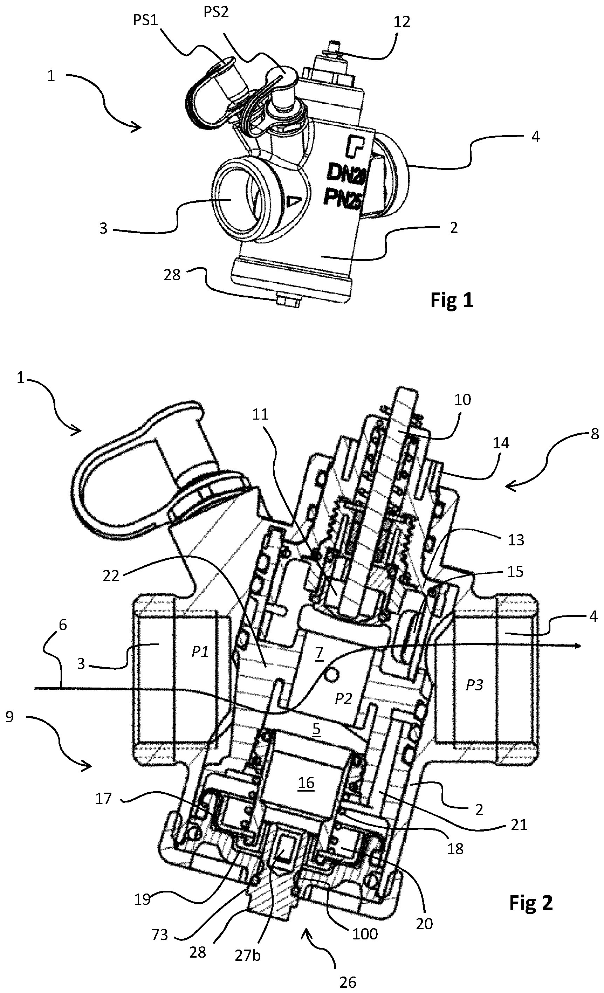

An embodiment of a pressure-independent control valve with draining functionality is shown in Figures 1 to 7. This embodiment of the invention is not intended to be limiting.

As shown in the Figures, the valve 1 according to the invention comprises a valve body 2. The valve body 2 may have a generally tubular shape, or any suitable shape. The valve body 2 comprises a fluid inlet 3 and a fluid outlet 4. A fluid path 5 extends through the valve body 2 between the fluid inlet 3 and fluid outlet 4. In the embodiment shown in the Figures, the fluid inlet 3 and fluid outlet 4 are arranged on opposing sides of the valve body 2 and are co-axial.

The valve 1 is arrangeable in a fluid system to control the flow of fluid of the fluid system. The fluid system may be an HVAC system. The fluid inlet 3 and fluid outlet 4 may be coupled to fluid pipes FP of the fluid system.

When the valve 1 is operating in fluid control mode, fluid enters the valve 1 via the fluid inlet 3, flows along the fluid path 5 through the valve body 2 and exits the valve via the fluid outlet 4. Arrow 6 in Figure 2 depicts the general directional flow of fluid through the valve 1 when operating in fluid control mode.

In the invention, and in the embodiment shown in the Figures, the fluid path 5 may comprise an upstream fluid path region 5a and a downstream fluid path region 5b. The upstream fluid path region 5a and downstream fluid path region 5b are in fluid communication via an adjustment orifice 7 that is arranged within the fluid path. The upstream fluid path region 5a is in fluid communication with the fluid inlet 3. The downstream fluid path region 5b is in fluid communication with the fluid outlet 4. In fluid flow control operation, fluid entering the valve within the fluid inlet 3 has a first pressure P1, fluid within the fluid path 5 has a pressure P2 and fluid leaving the valve within the fluid outlet 4 has a third pressure P3. The pressure differs through the valve whereby P1 > P2 > P3.

The valve 1 of the invention comprises a fluid flow control 8 for controlling the volume of fluid through the valve. In the embodiment shown in the Figures, the fluid flow control 8 is arranged in the downstream flow path region 5b.

The valve 1 of the invention comprises a pressure differential control 9 for controlling the pressure difference of the fluid to maintain a constant pressure difference across the valve, and thereby maintain a constant flow rate of fluid regardless of any operating changes (variations) in pressure. The pressure differential control may be configured to control the pressure difference between fluid pressure P1 within the fluid inlet 3 and the fluid pressure P2 within the fluid path 5. Alternatively, the pressure differential control may be configured to control the pressure difference between the fluid pressure P2 within the fluid path 5 and the fluid pressure P3 within fluid outlet 4. In the embodiment shown in the Figures, the pressure differential control 9 is arranged in the upstream fluid path region 5a and is configured to control the pressure difference between the fluid pressure P2 within the fluid path 5 and the fluid pressure P3 within the fluid outlet 4.

In the embodiment of the invention as shown in the Figures, the fluid flow control 8 may comprise a pin 10, a cone 11 coupled to the distal end of the pin, and a pin actuator 12 coupled to a proximal end of the pin. The pin 10 is linearly movable under the actuation of the pin actuator 12, and the linear motion of the pin 10 linearly moves the cone 11 in a direction towards or away from the adjustment orifice 7. The movement of the cone 11 relative to the adjustment orifice 7 controls the volume flow rate of fluid through the adjustment orifice 7. As the cone 11 moves towards the adjustment orifice 7, the volume of fluid through the adjustment orifice 7 decreases. As the cone 11 moves away from the adjustment orifice 7 the volume of fluid through the adjustment orifice 7 increases. The cone 11 is movable under the actuation of the pin actuator 12 between an open position and closed position relative to the adjustment orifice 7, and any position therebetween. When the cone 11 is in the open position, the adjustment orifice 7 is fully open and the volume flow rate of fluid through the adjustment orifice 7 is a maximum volume flow rate. As explained further below, the cone may be moved to a closed position whereby the cone engages to close the adjustment orifice 7, and the flow of fluid through the fluid outlet 4 is thereby restricted (prevented). The pin actuator 12 may be rotated, pressed or otherwise actuated to move the pin 10 and thereby regulate the volume flow rate of fluid through the valve 1 using the cone 11 as desired.

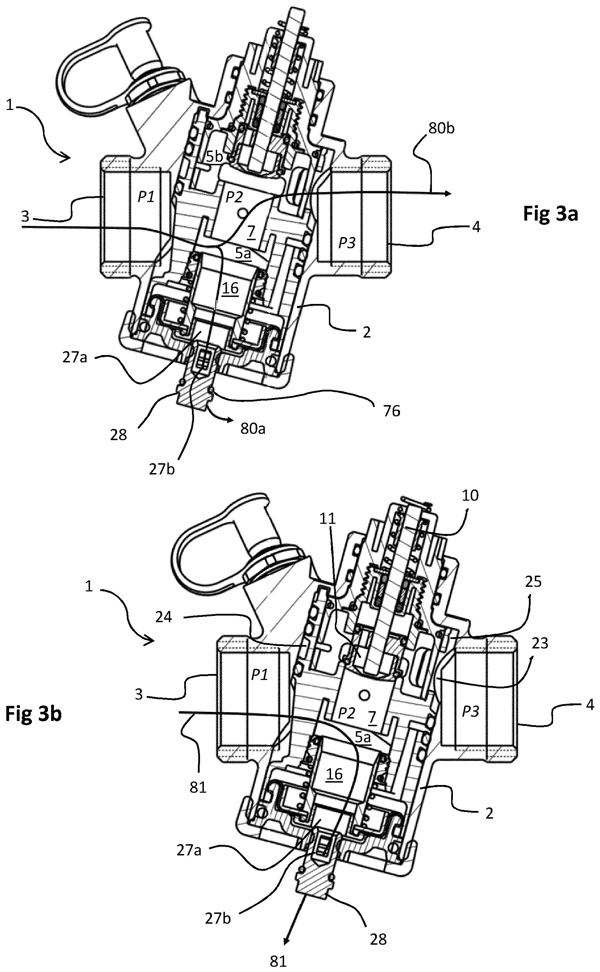

Alternatively or additionally, and in the embodiment as shown in the Figures, the fluid flow control 8 may comprise a shutter 13 and a shutter actuator 14 coupled to the shutter 13. The shutter 13 is arranged adjacent the fluid outlet 4. The shutter 13 is movable under the actuation of the shutter actuator 14 between an open position (see Figures 2 and 3a) and a closed position (see Figure 3b) relative to the fluid outlet 4, and any position therebetween. When the shutter 13 is in the open position, the fluid outlet 4 is open. When the shutter 13 is in the closed position, the fluid outlet 4 is closed. The shutter comprises a window 15 (aperture) defining a volume flow rate and a wall (not shown). When the shutter is in the open position, the window is at least substantially aligned with the fluid outlet 4, to allow fluid to flow through the fluid outlet 4 with the defined volume flow rate. As explained further below, when the shutter is in the closed position, the wall is at least substantially aligned with the fluid outlet 4, so as to seal and prohibit the flow of fluid through the fluid outlet 4. The shutter may be arranged in a partially open position, whereby the window 15 is partially aligned with the fluid outlet 4. As such, fluid may flow through the fluid outlet at a reduced volume flow rate, less than the defined volume flow rate of the window. The shutter may comprise a plurality of windows (apertures), each window defining different volume flow rates, and the shutter actuator may be configured to move the shutter according to a desired volume flow rate. The shutter actuator 14 may operate independently or in conjunction with the pin actuator 12. The shutter 13 may be actuated sequentially and/or simultaneously to the actuation of the cone 11. The shutter actuator 14 may be rotated, pressed or otherwise actuated to move the shutter 13, and thereby regulate the volume flow rate of fluid through the valve 1 using the shutter as desired.

In the invention as shown in the Figures, the pressure differential control 9 comprises a piston 16, a diaphragm 17 (or other suitable flexible membrane) connected to the piston, and a spring 18 (or other suitable elastic member) acting on the upperside of the diaphragm 17. The piston 16 is linearly movable under the actuation of the diaphragm 17 in a direction towards or away from the adjustment orifice 7. The diaphragm 17 extends between a first chamber 19 and a second chamber 20, whereby the first chamber 20 is arranged below the diaphragm 17 and the second chamber 20 is arranged above the diaphragm 17. The first chamber 19 is in fluid communication with the fluid path 5 and so comprises fluid from the fluid path having a pressure P2. In the embodiment shown in the Figures, the piston 16 is hollow and defines a fluid channel between the upstream fluid path 5a and the first chamber 19. As such, the first chamber 19 is in fluid communication with the fluid path 5 via the piston 16. The second chamber 20 is in fluid communication with the fluid outlet 4 and so comprises fluid from the fluid outlet 4 having a pressure P3. In the embodiments shown in the Figures, the valve 1 further comprises a fluid channel 21 extending between the second chamber 20 and the fluid outlet 4. As such, the second chamber 20 is in fluid communication with the fluid outlet 4 via the fluid channel 21.

When operating in fluid control mode, the underside of the diaphragm 17 is subject to a force exerted by the fluid at pressure P2 in the first chamber 19. The upperside of the diaphragm is subject to a force exerted by the fluid at pressure P3 in the second chamber 20 and a force exerted by the spring 18. The equilibrium of the forces acting on the diaphragm 17 determines the position of the diaphragm 17, and thereby the position of the piston 16 relative to the adjustment orifice 7. The position of the diaphragm 14, and thereby the position of the piston 16 relative to the adjustment orifice 7, adjusts automatically to any variations in fluid pressure P1 and/or P3 so as to maintain a constant pressure differential between fluid pressures P2 and P3.

In the invention, and in the embodiment shown in the Figures, the valve 1 may further comprises a sleeve 22 inserted within valve body 2. The sleeve 22 is a separate component to the valve body 2. The sleeve 22 preferably conforms to the inner profile of the valve body 2 and forms a close fit. As such, the sleeve 22 acts as a liner within the valve body 2. The sleeve 22 may have a tubular shape, or any other suitable shape.

In the invention, and in the embodiment shown in the Figures, the sleeve 22 may comprise a sleeve inlet aperture (not shown) aligned with the fluid inlet 3, and a sleeve outlet aperture 23 aligned with the fluid outlet 4. The sleeve 22 may house the fluid path 5 extending between the fluid inlet 3 and fluid outlet 4. As such, the sleeve 22 also houses the adjustment orifice 7 arranged in the fluid path 5.

As shown in the Figures, the sleeve 22 may house the fluid flow control 8, whereby at least a portion of the fluid flow control 8 is arranged within the sleeve 22. As shown in the Figures, the sleeve 22 may house the shutter 13, whereby the sleeve is configured between the shutter 13 and the valve body 2. As such, when the shutter is arranged in the open position, the first window 15, sleeve outlet aperture 23 and fluid outlet 4 are substantially aligned - see Figure 2.

As shown in the Figures, the sleeve 22 may also house the pressure differential control 9, whereby at least a portion of the differential control 9 is arranged within the sleeve 22.

The sleeve 22 may comprise one or more fluid channels to transfer fluid, and thereby fluid pressure between one region of the valve 1 to another. For example, the sleeve 22 may comprise the first fluid channel 21 extending between the fluid outlet 4 and second chamber 20 to transfer fluid having the third pressure P3 from the fluid outlet 4 to the second chamber 20. In the embodiment shown in the Figures, the fluid channel 21 is formed internally within the sleeve 22.

In the present invention, the valve 1 may comprise a fluid path pressure sensor PS1 to monitor the fluid pressure P2 in the fluid path. The valve may comprise a fluid outlet pressure sensor PS2 to monitor the fluid pressure P3 in the fluid outlet 4. In the embodiment of the valve 1 shown in the Figures, the sleeve 22 may also comprise a second fluid channel 24 extending between the fluid path 5 and the fluid path pressure sensor PS1. The second fluid channel 24 transfers fluid from the fluid path 5, and therefore fluid pressure P2, to the fluid path pressure sensor PS1 so that the pressure P2 of the fluid path 5 can be monitored. At least a portion of the second fluid channel 24 may extend along the outer surface of the sleeve 22 between the fluid path 5 and the fluid path pressure sensor PS1. The second fluid channel 24 may comprise a recess formed in the outer surface of the sleeve. The second fluid channel 24 may comprise a gap space defined between seals and/or the outer surface of the sleeve and the inner surface of the valve body. Also, the sleeve may comprise a third fluid channel 25 extending between the fluid outlet 4 to fluid outlet pressure sensor PS2. The third fluid channel 25 transfers fluid from the fluid outlet 4, and therefore fluid pressure P3, to the fluid outlet pressure sensor PS2 so that the pressure P3 of the fluid outlet 4 can be monitored. At least a portion of the third fluid channel 25 may extend along the outer surface of the sleeve 22 between the fluid outlet 4 and the fluid outlet pressure sensor PS2. The third fluid channel 25 may comprise a recess formed in the outer surface of the sleeve. The third fluid channel 25 may comprise a gap space defined between seals and/or between the outer surface of the sleeve and the inner surface of the valve body 2. The sensors monitor the pressure to identify the pressure differential control is maintaining a constant pressure difference between P2 and P3.

The sleeve may be formed from a plastic material. The sleeve may be manufactured using an injection moulding technique. Hence, the one or more fluid channels may be moulded into the sleeve.

When the valve 1 of the present invention is installed in a fluid system, solid debris from the installation may collect inside the valve 1. Alternatively or in addition, if the fluid flowing through the valve 1 has a substandard purity, solid debris carried by the fluid may accumulate in the valve 1. Over time, the debris may cause a blockage and/or impair the function of the valve 1. For example, the debris may impair the motion of the fluid flow control 8 and/or the pressure differential control 9. This, in turn, may lead to the valve 1 operating less efficiently or even failing.

To allow for the removal of debris, the valve 1 of the present invention comprises a drain 26. The drain 26 allows for fluid to be drained from the valve 1. The draining action of the fluid has a flushing effect that helps to carry and thereby remove debris from the valve 1. The drain 26 allows for the draining of fluid from the valve 1 whilst the valve is arranged in-situ within a fluid system, such as for example an HVAC system. The valve 1 is configured to operate in a draining mode to drain fluid.

In the invention, the drain 26 comprises a drain outlet 27 and a drain closure 28 to open and close the drain outlet 27. When the drain outlet 27 is open fluid can drain from the valve 1. When the drain outlet 27 is closed no fluid can drain from the valve 1. The drain outlet 27 is arranged in fluid communication with the first chamber 19 of the pressure differential control 9. As such, fluid drains from the first chamber 19 when the drain outlet 27 is open. As previously explained, the first chamber 19 is in fluid communication with the fluid path 5, and the fluid path 5 supplies the first chamber 19 with fluid. Hence, when the drain outlet 27 is open, fluid can flow from the fluid path 5, via the first chamber 19, to drain from the valve. Debris can be carried from the valve 1 by the draining fluid. By arranging the drain outlet 27 in fluid communication with the first chamber 19, the draining of fluid particularly helps to remove debris from the pressure differential control 9.

In the invention, the drain outlet 27 may comprise a drain outlet channel 27a to guide fluid from the first chamber 19. In an embodiment of the invention, and as shown in the Figures, the drain 26 is provided in the valve body 2. The drain outlet 27 comprises a fluid channel 27a extending from the first chamber 19 and through the valve body 2. The drain outlet 27 opens the first chamber 19 to an environment external to the valve and the fluid system. The external environment may have atmospheric pressure.

As previously explained, the fluid in the fluid path 5 and first chamber 19 has a fluid pressure P2. Hence, fluid can drain under pressure P2 from the valve when the drain outlet 27 is open. To further aid the draining flow of fluid, the drain outlet channel 27a may also be configured to extend in a downwardly direction such that fluid is able to drain under gravity. In an embodiment of the invention as shown in the Figures, the pressure differential control 9 is housed in a lower portion of the valve body 2, and the drain outlet channel 27a extends from the underside of the first chamber 19 to the underside of the valve body 2. The drain outlet channel 27a has a downwardly orientation and so fluid can drain under pressure P2 and also under gravity when the drain outlet 27 is open.

When the valve 1 is operating in draining mode for an extended period, the fluid pressure in the first chamber 19 may equilibrate to the pressure of the environment external to the valve. For example, if the environment external to the valve 1 has an atmospheric pressure, the fluid pressure in the first chamber 19 may equilibrate to atmospheric pressure. This change in fluid pressure in the first chamber 19 may change the forces acting on the diaphragm 17 and cause the diaphragm 17 to adjust, which in turn may actuate the piston 5 to move to a lowest position relative to the adjustment orifice 7.

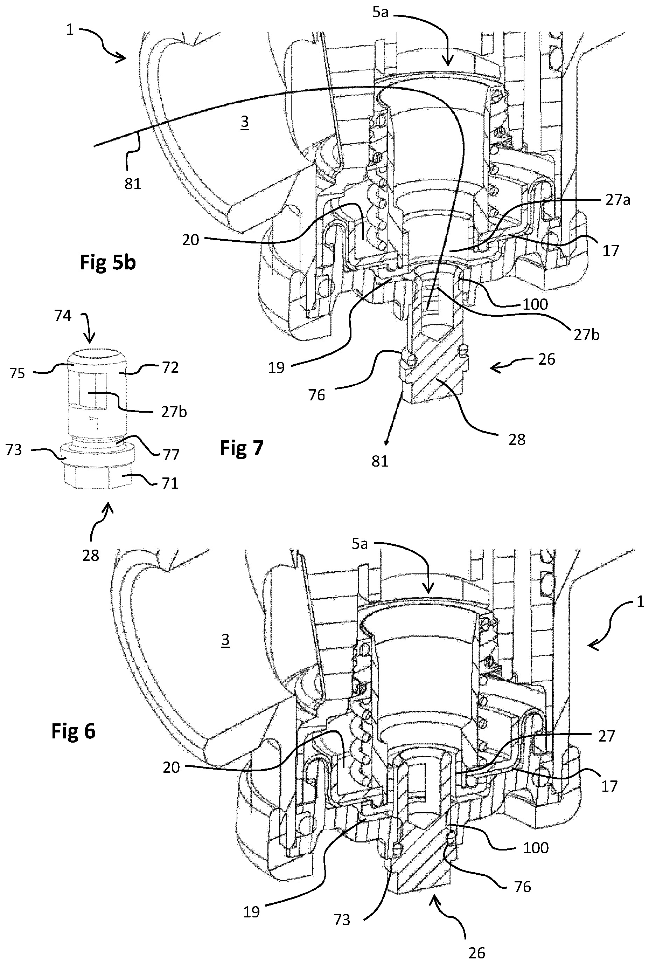

In the invention, and as shown in the Figures, the drain closure may be movable to an open position to open the drain outlet 27 (as shown for example in Figures 3a to 5b) and movable to a closed position to close the drain outlet 27 (as shown for example in Figures 2 and 6). When the drain closure 28 is in the open position, the drain outlet 27 and thereby the first chamber 19 are open to the external environment, and so fluid can drain from the valve 1. When the drain closure 28 is in the closed position, the drain outlet 27, and thereby the first chamber 19, is closed to the external environment and so no fluid can drain from the valve 1.

The drain closure 28 may be linearly, rotationally or pivotally movable between the open position and the closed position. Other moving actions suitable for moving the drain closure between the open position and the closed position are possible.

The drain closure 28 may be movable to the open position whereby the drain closure is removed from the drain outlet 27 or arranged at a spaced distance from the drain outlet 27. The drain closure 28 may be movable to the closed position, whereby the drain closure is mounted on the drain outlet 27 or arranged within the drain outlet 27. The drain closure 28 may be movable within the drain outlet 27 between the open position and the closed position.

By way of example, the drain closure 28 may comprise a cap or lid that is movable to an open position removed from the drain outlet 27 so as to open the drain outlet and is movable to a closed position mounted on the drain outlet so as to close the drain outlet. The drain closure 28 may comprise a plug that is movable to an open position removed from the drain outlet 27 so as to open the drain outlet and is moved to a closed position inserted within the drain outlet so as to close the drain outlet. The drain closure 28 may comprise a door or cover that is movable to an open position spaced from the drain outlet 27 so as to open the drain outlet, and is movable to a closed position extending across the drain outlet so as to close the drain outlet. The drain closure 28 may comprise a slidable plug or rotatable screw that is movable within the drain outlet 27 between the open position and the closed position. Other configurations of drain closures suitable for open and closing the drain outlet are possible.

The drain closure 28 may be manually movable between the open position and the closed position. Additionally or alternatively, the drain 26 may comprise an automated actuator (not shown) to automate the movement of the drain closure 28 between open position and the closed position.

In an embodiment of the invention, and as shown in the Figures, the drain closure 28 may be arranged within the drain outlet 27. A portion of the drain closure 28 may protrude from the drain outlet 27 from the underside the valve body 2 to allow for manual access. The drain closure 28 is movable within the drain outlet channel 27a between a closed position (as shown for example in Figures 2 and 6) and an open position (as shown for example in Figures 3a to 5b).

In the embodiment shown in the Figures, the drain closure 28 is a rotatable screw comprising an upper portion located in the drain outlet channel 27a and a lower portion protruding from the underside of the valve body 3. The screw is manually rotatable by a user between the open position and the closed position within the drain outlet channel 27a. As shown in Figure 7, the rotatable screw type drain closure 28 may comprise a head 71 and a shank 72. In the embodiment shown in Figure 7, the head 71 has a hexagonal shape and is configured to be rotated (screwed/unscrewed) by a spanner. Other configurations of the head 71 are suitable. The shank 72 comprises an upper surface 74 and a thread on its side surface (not shown). The inner surface of the drain outlet 26 comprises a corresponding thread 100 to engage the thread of the shank. The shank further comprises a shank protrusion 75 arranged between the shank thread and shank upper surface 74, increasing the diameter of the shank between the shank thread and shank upper surface 74. The screw drain closure 28 further comprises a circumferential flange 73 arranged between the head 71 and shank 72.

In the invention, the drain 26 may comprise one or more retainer to retain the drain closure 28 within the drain outlet 27. As such, the retainer acts as a stop to prevent the removal of the drain closure 28 from the valve 1. The retainer may retain the drain closure 28 in the drain outlet 27 as the drain closure 28 moves between the open position and the closed position within the drain outlet 27. The retainer 100 may guide the movement of the drain closure 28 as it moves between the open position and the closed position. The retainer may restrict the movement of the drain closure 28 beyond the open position. As such, the retainer acts as a stop to prevent the drain closure from being moved beyond the open position, for example from being over-rotated out of the drain outlet 27. The retainer may restrict the movement of the drain closure 28 beyond the closed position. As such, the retainer acts as a stop to prevent the drain closure 28 from being moved beyond the closed position, for example, from being over-rotated into the drain outlet 27. The retainer may have any suitable configuration. For example, the retainer may comprise one or more protrusion. The retainer may further comprise one or more corresponding recess to receive the one or more protrusion. The retainer may comprise one or more corresponding protrusion, flange etc. to abut the one or more protrusion. In an embodiment of the invention shown in the Figures, the drain 26 comprises a first retainer comprising the shank protrusion 75 of the screw drain closure 28. As shown in Figures 3a to 5b, when the screw drain closure 28 is rotated to the open position, the shank protrusion 75 is configured to abut the drain outlet thread 100. As such, the screw drain closure 28 cannot move beyond the open position and it is retained within the drain outlet channel 27a at the open position. In the embodiment of the invention shown in the Figures, the drain 26 comprises a second retainer comprising the flange 73 of the screw drain closure 28. As shown in Figures 2 and 6, when the drain closure 28 is arranged in the closed position, the flange 73 is configured to abut the drain outlet thread 100, and thereby prevent further movement of the screw drain closure 28 into the drain outlet channel 27a.

In the invention, the drain outlet 27 may comprise one or more drain outlet aperture 27b through which fluid can exit the valve 1 when the drain outlet is open. The drain outlet channel 27a is configured to guide fluid from the first chamber 19 to the drain outlet aperture 27b. In an embodiment, the drain outlet aperture 27b may be an aperture (opening) formed in the drain outlet channel 27a, whereby the drain outlet aperture is open when the drain closure 28 is arranged in the open position and fluid can exit the valve through the open drain outlet aperture. In an embodiment, the drain outlet aperture 27b may be a gap space formed between the drain outlet channel 27a and drain closure 28 when the drain closure 28 is arranged in the open position, whereby fluid can exit the valve through the gap space. In an embodiment as shown in the Figures, the drain outlet aperture 27b may be an aperture (opening) formed in the screw drain closure 28. When the screw drain closure 28 is in the open position, the drain outlet aperture 27b is open and fluid can drain from the valve 1. When the screw drain closure 28 is in the closed position, the drain outlet aperture 27b is closed and no draining can occur. The drain outlet aperture 27b is formed in the side wall of the screw drain closure 28. The drain outlet aperture 27b is configured such that when the screw drain closure 28 is in the open position, the aperture is arranged externally to the valve 1. As such, when the screw drain closure 28 is in the open position, fluid is guided to drain from the first chamber 19, along the fluid outlet channel 27a and exits the valve 1 through the drain outlet aperture 27b - see Figures 3a to 5b. When the screw drain closure 28 is arranged in the closed position, the screw drain closure 28 is sufficiently retracted (inserted) within the drain outlet channel 27a such that the drain outlet aperture 27b is arranged internally within the drain outlet channel 27a and thereby closed. Hence, no fluid can exit the drain outlet aperture 27b. This is shown, for example, in Figures 2 and 6.

In the present invention, the drain closure 28 may further comprise one or more seal 76 to seal the drain outlet 27 when the drain closure 28 is in the closed position. In the embodiment shown in the Figures, the seal 76 may be arranged between the shank 72 and the head 71, and positioned in a groove 77. The groove 77 may define the flange 73 of the drain closure 28. In the embodiment shown in the Figures, seal 76 comprises an O-ring. Other types of seals and arrangements are suitable.

In the present invention, the drain 26 may comprise a fluid outlet closure to close the fluid outlet 4 and thereby prevent fluid flowing into and/or out of the fluid outlet 4 during the draining mode. The fluid outlet closure may comprise any suitable closure. The fluid outlet closure may be arranged within the valve 1 to close the fluid outlet 4. Alternatively, the fluid outlet closure may be arranged external to the valve 1, for example in a fluid pipe coupled to the fluid outlet 4. In an embodiment as described above, the fluid outlet closure may comprise the fluid flow control 8 wherein the cone 11 is movable to a closed position to engage and close the adjustment orifice 7. Additionally or alternatively, as described above, the fluid outlet closure may comprise the fluid flow control 8 wherein the shutter 13 is movable to a closed position to close the fluid outlet 4. In the embodiment depicted in the Figures, the fluid outlet closure comprises the fluid flow control 8 wherein the cone 11 is movable to the closed position to close the adjustment orifice 7. When the adjustment orifice 7 is closed by the cone 11, the fluid outlet 4 is thereby closed and no fluid can enter or exit the valve through the fluid outlet 4 - as seen in Figure 3b.

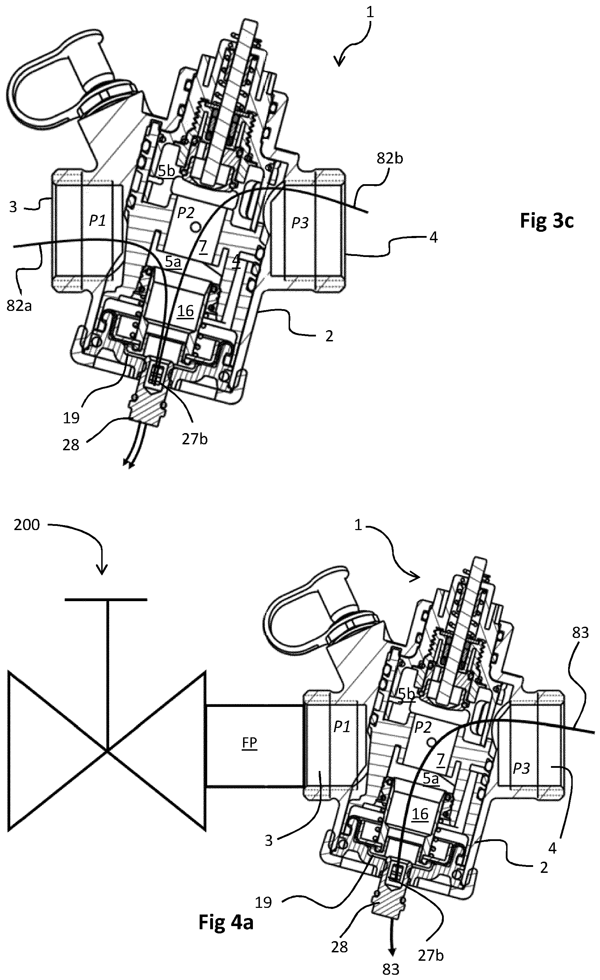

In the present invention, the drain 26 may comprise a fluid inlet closure to close the fluid inlet 3 and thereby prevent fluid flowing into and/or out of the fluid inlet 3 during the draining mode. The fluid inlet closure may comprise any suitable closure. The fluid inlet closure may be arranged within the valve 1 to close the fluid inlet 3. Alternatively, the fluid inlet closure may be arranged external to the valve 1, for example in a fluid pipe coupled to the fluid inlet 3. In the embodiment of the present invention depicted in Figure 4a, the fluid inlet closure comprises a valve 200 movable between an open position and a closed position to respectively open and close the fluid inlet 2. When the fluid inlet 3 is closed by the valve 200 no fluid can enter or exit the valve through the fluid inlet 3. In the embodiment depicted in Figure 4a, the valve 200 is arranged external to valve body 3 in a fluid pipe FP of the fluid system coupled to the fluid inlet 3.

Figure 3a-5b depict the valve 1 of the present invention operating in the draining mode where the drain closure 28 is in the open position. The drain outlet 27 is thereby open and the first chamber 19 and the fluid path are thus in fluid communication with the external atmosphere outside the valve 1.

Figure 3a shows the valve 1 of the present invention operating in a first forward draining mode where the fluid inlet 3, the drain outlet 27 and the fluid outlet 4 are open. As such, fluid flows in a forward direction into the valve through the fluid inlet 3 and along the upstream fluid path 5a. A first portion of the fluid is diverted from the upstream fluid path 5a and drains, via the piston 16 and first chamber 19, through the open drain outlet 27, whereby the draining fluid is guided along the drain outlet channel 27a and out through the fluid outlet aperture 27b (arrow 80a). A second portion of fluid continues to flow along the downstream fluid path 5b and out through the fluid outlet 4 (arrow 80b).

Figure 3b and Figure 5b shows the valve of the present invention operating in a second forward draining mode where the fluid inlet 3 and the drain outlet 28 are open and the fluid outlet 4 is closed. As such, fluid flows in a forward direction into the valve through the fluid inlet 3, along the upstream fluid path 5a. At least substantially all the fluid is diverted from the upstream fluid path 5a to drain, via the piston 16 and the first chamber 19, through the open drain outlet 27, whereby the draining fluid is guided along the drain outlet channel 27a and exits the valve 1 through the drain outlet aperture 27b (arrow 81).

Figure 3c shows the valve of the present invention operating in a double forward draining mode and back draining mode. As such, a first fluid flows in a forward direction into the valve 1 through the fluid inlet 3, along the upstream fluid path 5a and drains, via the piston 16 and the first chamber 19, through the open drain outlet 27, whereby it is guided along the drain outlet channel 27a and exits through the drain outlet aperture 27b (arrow 82a). A second fluid simultaneously flows in a backward direction into the valve 1 through the fluid outlet 4, through the adjustment orifice 7, and then drains from the upstream fluid path 5a, via the piston 16 and the first chamber 19, through the open drain outlet 27, whereby fluid is guided along the drain outlet channel 27a and exits the valve 1 through the drain outlet aperture 27b (arrow 82b).

Figure 4a shows the valve of the present invention operating in a first back draining mode where the fluid outlet 4 and drain outlet 27 are open and the fluid inlet 3 is closed. As such, fluid flows in a backward direction into the valve 1 through the fluid outlet 4, through the adjustment orifice 7, to the upstream fluid path 5a. At least substantially all the fluid is diverted to drain from the upstream fluid path 5a, via the piston 16 and the first chamber 19, through the open drain outlet 27, whereby the draining fluid is guided along the drain outlet 27a and exits the valve 1 through the drain outlet aperture 27b (arrow 83).

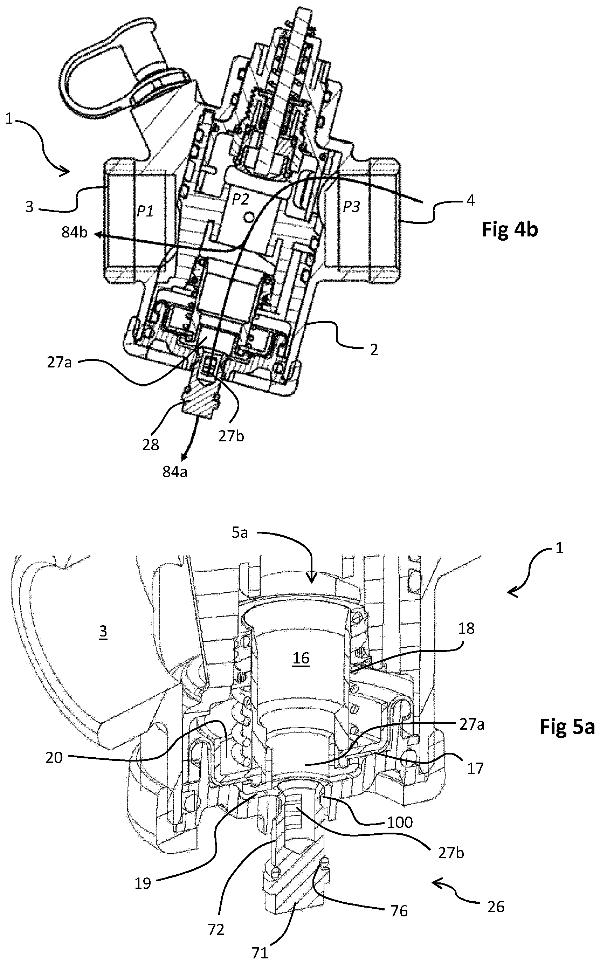

Figure 4b shows the valve of the present invention operating in a second back draining mode where the fluid inlet 3, drain outlet 27 and fluid outlet 4 are open. As such, fluid flows in a backward direction into the valve through the fluid outlet 4, through the adjustment orifice 7 to the upstream fluid path 5a. A first portion of the fluid is diverted from the upstream fluid path 5a to drain, via the piston 16 and the first chamber 19, through the open drain outlet 27, whereby the draining fluid is guided along the drain outlet channel 27a and exits the valve 1 through the drain outlet aperture 27b (arrow 84a). A second portion of the fluid flows through the upstream fluid 5a and out through the fluid inlet 3 (arrow 84b).

Figure 5a and 5b show a cross-section of the valve according to the present invention where the drain closure 28 is arranged in the open position. The drain closure 28 extends (protrudes) from the drain outlet channel 27a on the underside of the valve 1 such that the drain outlet aperture 27b is arranged externally to the drain outlet 27. The drain outlet aperture 27b is open to the external environment, and the drain outlet 27 is thereby open to allow for draining. In Figure 5b, arrow 81 indicates the directional flow of fluid from the fluid inlet 3 and through the open drain outlet 27. The fluid is diverted to drain through the open drain outlet 27 whereby the fluid drains via the piston 16 and the first chamber 19, along the drain outlet channel 27a and exits the valve through the drain outlet aperture 27b.

Figure 6 shows a cross section of the valve according to the present invention where the drain closure 28 is arranged in the closed position. The drain closure 28 is retracted within the drain outlet channel 27a. As such, the drain outlet aperture 27b is arranged internally within the drain outlet channel 27a and so sealed from the environment external to the valve 1, and the drain outlet 27 is thereby closed. Thus, no fluid can drain from the valve.

It will be appreciated by persons skilled in the art that the above embodiments have been described by way of example only and not in any limitative sense, and that various alterations and modifications are possible without departing from the scope of the invention as defined by the appended claims.

## Claims

1. A pressure-independent control valve (1), comprising:
a fluid inlet (3) housed in a valve body (2);
a fluid outlet (4) housed in the valve body (2);
a fluid path (5) extending through the valve body (2) between the fluid inlet (3) and the fluid outlet (4);
a pressure differential control (9) housed in the valve body (2), wherein the pressure differential control (9) comprises a piston (16) having a piston channel defined therethrough, a diaphragm (17) connected to the piston (16), and an elastic member (18); and
a drain (26) provided in the valve body (2), the drain (26) comprising a drain outlet (27) and a drain closure (28) to open and close the drain outlet (27); wherein
the diaphragm (17) defines a first chamber (19) in fluid communication with the fluid path (5) and a second chamber (20) in fluid communication with the fluid outlet (4) via a fluid channel (21); the first chamber (19) arranged at a first side of the diaphragm (17) and the second chamber (20) arranged at a second side of the diaphragm (17);
the elastic member (18) acts on the second side of the diaphragm (17);
the first chamber (19) is in fluid communication with the fluid path (5) via the piston channel; and
the drain outlet (27) is in fluid communication with the first chamber (19), and is positioned such that when the drain outlet (27) is open fluid drains from the fluid path (5), via the piston channel and the first chamber (19), through the drain outlet (27).

2. The valve (1) according to claim 1, wherein the drain outlet (27) comprises a drain outlet channel (27a) extending from the first chamber (19) and through the valve body (2), wherein the drain closure (28) is movable within the drain outlet channel (27a) between the open position and closed position.

3. The valve (1) according to claim 2, wherein the drain (26) further comprises one or more retainer (100) to retain the drain closure (28) within the drain outlet (27).

4. The valve (1) according to claim 3, wherein the retainer (100) inhibits movement of the drain closure (28) beyond the open position.

5. The valve (1) according to any one of claims 2 - 4, wherein the pressure differential control (9) is housed in a lower portion of the valve body (2) and the drain outlet channel (27a) extends from an underside of the first chamber (19) to an underside of the valve body (2).

6. The valve (1) according to any preceding claim, wherein the piston (16) is hollow defining the piston channel between the fluid path (5) and the first chamber (19).

7. The valve (1) according to any preceding claim, wherein one or more drain outlet aperture (27b) is formed in the drain closure (28).

8. The valve (1) according to claim 7, wherein the drain outlet (27) further comprises a drain outlet channel (27a) to guide fluid from the first chamber (19) to the one or more drain outlet aperture (27b).

9. The valve (1) according to any preceding claim, wherein the valve (1) has a draining operating mode whereby the drain outlet (27) is open.

10. The valve (1) according to claim 9, wherein the draining mode is a forward draining mode whereby the valve (1) is configured to allow fluid to flow in through the fluid inlet (3) and out through the open drain outlet (27) and/or wherein the draining mode is a backward draining mode whereby the valve (1) is configured to allow fluid to flow in through the fluid outlet (4) and out through the open drain outlet (27).

11. The valve (1) according to claim 9, wherein the draining mode is a forward draining mode whereby the valve (1) is configured to allow fluid to flow in through the fluid inlet (3) and out through the open drain outlet (27); and the valve (1) comprises a fluid outlet closure to close the fluid outlet (4) when the valve (1) is operating in the forward draining mode.

12. The valve (1) according to claim 9, wherein the draining mode is a backward draining mode whereby the valve (1) is configured to allow fluid to flow in through the fluid outlet (4) and out through the open drain outlet (27); and wherein the valve (1) comprises a fluid inlet closure to close the fluid inlet (3) when the valve (1) is operating in the backward draining mode.

13. A fluid system comprising:
a pressure-independent control valve (1) as defined in any preceding claim;
a first fluid pipe coupled to the fluid inlet (3) of the valve (1); and
a second fluid pipe coupled to the fluid outlet (4) of the valve (1).

14. The fluid system according to claim 13, further comprising a fluid outlet closure to close the fluid outlet (4) when the valve (1) is operating in the forward draining mode, wherein the fluid outlet closure is arranged in the second fluid pipe; and/or further comprising a fluid inlet closure to close the fluid inlet (3) when the valve (1) is operating in the backward draining mode, wherein the fluid inlet closure is arranged in the first fluid pipe.

15. A method of draining a pressure-independent control valve (1) according to any of claims 1 to 12, comprising the step of:
configuring the drain closure (28) to the open position such that fluid can drain through the drain outlet (27).

## Patentansprüche

1. Ein druckunabhängiges Steuerventil (1), das Folgendes beinhaltet:
einen Fluideinlass (3), der in einem Ventilkörper (2) untergebracht ist;
einen Fluidauslass (4), der in dem Ventilkörper (2) untergebracht ist;
einen Fluidweg (5), der sich durch den Ventilkörper (2) zwischen dem Fluideinlass (3) und dem Fluidauslass (4) erstreckt;
eine Druckdifferenzsteuerung (9), die in dem Ventilkörper (2) untergebracht ist, wobei die Druckdifferenzsteuerung (9) einen Kolben (16) mit einem dadurch definierten Kolbenkanal, eine Membran (17), die mit dem Kolben (16) verbunden ist, und ein elastisches Element (18) beinhaltet; und
einen Ablauf (26), der in dem Ventilkörper (2) bereitgestellt ist, wobei der Ablauf (26) einen Ablaufauslass (27) und einen Ablaufverschluss (28) zum Öffnen und Schließen des Ablaufauslasses (27) beinhaltet; wobei
die Membran (17) eine erste Kammer (19) in Fluidkommunikation mit dem Fluidweg (5) und eine zweite Kammer (20) in Fluidkommunikation mit dem Fluidauslass (4) über einen Fluidkanal (21) definiert; wobei die erste Kammer (19) an einer ersten Seite der Membran (17) angeordnet ist und die zweite Kammer (20) an einer zweiten Seite der Membran (17) angeordnet ist;
das elastische Element (18) auf die zweite Seite der Membran (17) wirkt;
die erste Kammer (19) über den Kolbenkanal in Fluidkommunikation mit dem Fluidweg (5) steht; und
der Ablaufauslass (27) in Fluidkommunikation mit der ersten Kammer (19) steht, und so positioniert ist, dass, wenn der Ablaufauslass (27) offen ist, Fluid aus dem Fluidweg (5) über den Kolbenkanal und die erste Kammer (19) durch den Ablaufauslass (27) abläuft.

2. Ventil (1) gemäß Anspruch 1, wobei der Ablaufauslass (27) einen Ablaufauslasskanal (27a) beinhaltet, der sich von der ersten Kammer (19) und durch den Ventilkörper (2) erstreckt, wobei der Ablaufverschluss (28) innerhalb des Ablaufauslasskanals (27a) zwischen der offenen Position und der geschlossenen Position bewegbar ist.

3. Ventil (1) gemäß Anspruch 2, wobei der Ablauf (26) ferner einen oder mehrere Halter (100) beinhaltet, um den Ablaufverschluss (28) innerhalb des Ablaufauslasses (27) zu halten.

4. Ventil (1) gemäß Anspruch 3, wobei der Halter (100) eine Bewegung des Ablaufverschlusses (28) über die offene Position hinaus verhindert.

5. Ventil (1) gemäß einem der Ansprüche 2-4, wobei die Druckdifferenzsteuerung (9) in einem unteren Abschnitt des Ventilkörpers (2) untergebracht ist und sich der Ablaufauslasskanal (27a) von einer Unterseite der ersten Kammer (19) zu einer Unterseite des Ventilkörpers (2) erstreckt.

6. Ventil (1) gemäß einem der vorhergehenden Ansprüche, wobei der Kolben (16) hohl ist und den Kolbenkanal zwischen dem Fluidweg (5) und der ersten Kammer (19) definiert.

7. Ventil (1) gemäß einem der vorhergehenden Ansprüche, wobei eine oder mehrere Ablaufauslassöffnungen (27b) in dem Ablaufverschluss (28) gebildet sind.

8. Ventil (1) gemäß Anspruch 7, wobei der Ablaufauslass (27) ferner einen Ablaufauslasskanal (27a) beinhaltet, um Fluid von der ersten Kammer (19) zu der einen oder den mehreren Ablaufauslassöffnungen (27b) zu leiten.

9. Ventil (1) gemäß einem der vorhergehenden Ansprüche, wobei das Ventil (1) einen Ablaufbetriebsmodus aufweist, wodurch der Ablaufauslass (27) offen ist.

10. Ventil (1) gemäß Anspruch 9, wobei der Ablaufmodus ein Vorwärtsablaufmodus ist, wodurch das Ventil (1) konfiguriert ist, um zu ermöglichen, dass Fluid durch den Fluideinlass (3) einströmt und durch den offenen Ablaufauslass (27) ausströmt, und/oder wobei der Ablaufmodus ein Rückwärtsablaufmodus ist, wodurch das Ventil (1) konfiguriert ist, um zu ermöglichen, dass Fluid durch den Fluidauslass (4) einströmt und durch den offenen Ablaufauslass (27) ausströmt.

11. Ventil (1) gemäß Anspruch 9, wobei der Ablaufmodus ein Vorwärtsablaufmodus ist, wodurch das Ventil (1) konfiguriert ist, um zu ermöglichen, dass Fluid durch den Fluideinlass (3) einströmt und durch den offenen Ablaufauslass (27) ausströmt; und das Ventil (1) einen Fluidauslassverschluss zum Schließen des Fluidauslasses (4) beinhaltet, wenn das Ventil (1) in dem Vorwärtsablaufmodus betrieben wird.

12. Ventil (1) gemäß Anspruch 9, wobei der Ablaufmodus ein Rückwärtsablaufmodus ist, wodurch das Ventil (1) konfiguriert ist, um zu ermöglichen, dass Fluid durch den Fluidauslass (4) einströmt und durch den offenen Ablaufauslass (27) ausströmt; und wobei das Ventil (1) einen Fluideinlassverschluss zum Schließen des Fluideinlasses (3) beinhaltet, wenn das Ventil (1) in dem Rückwärtsablaufmodus betrieben wird.

13. Ein Fluidsystem, das Folgendes beinhaltet:
ein druckunabhängiges Steuerventil (1) gemäß einem der vorhergehenden Ansprüche;
eine erste Fluidleitung, die mit dem Fluideinlass (3) des Ventils (1) gekoppelt ist; und
eine zweite Fluidleitung, die mit dem Fluidauslass (4) des Ventils (1) gekoppelt ist.

14. Fluidsystem gemäß Anspruch 13, das ferner einen Fluidauslassverschluss zum Schließen des Fluidauslasses (4) beinhaltet, wenn das Ventil (1) in dem Vorwärtsablaufmodus betrieben wird, wobei der Fluidauslassverschluss in der zweiten Fluidleitung angeordnet ist; und/oder das ferner einen Fluideinlassverschluss zum Schließen des Fluideinlasses (3) beinhaltet, wenn das Ventil (1) in dem Rückwärtsablaufmodus betrieben wird, wobei der Fluideinlassverschluss in der ersten Fluidleitung angeordnet ist.

15. Ein Verfahren zum Ablaufenlassen eines druckunabhängigen Steuerventils (1) gemäß einem der Ansprüche 1 bis 12, das den folgenden Schritt beinhaltet:
Konfigurieren des Ablaufverschlusses (28) in die offene Position, sodass Fluid durch den Ablaufauslass (27) ablaufen kann.

## Revendications

1. Une soupape de commande indépendante de la pression (1), comprenant :
une entrée de fluide (3) logée dans un corps de soupape (2) ;
une sortie de fluide (4) logée dans le corps de soupape (2) ;
un trajet de fluide (5) s'étendant à travers le corps de soupape (2) entre l'entrée de fluide (3) et la sortie de fluide (4) ;
une commande de différentiel de pression (9) logée dans le corps de soupape (2), où la commande de différentiel de pression (9) comprend un piston (16) au travers duquel est défini un canal de piston, un diaphragme (17) relié au piston (16), et un élément élastique (18) ; et
un drain (26) prévu dans le corps de soupape (2), le drain (26) comprenant une sortie de drain (27) et une fermeture de drain (28) pour ouvrir et fermer la sortie de drain (27) ; où
le diaphragme (17) définit une première chambre (19) en communication fluidique avec le trajet de fluide (5) et une deuxième chambre (20) en communication fluidique avec la sortie de fluide (4) via un canal de fluide (21) ; la première chambre (19) étant agencée au niveau d'un premier côté du diaphragme (17) et la deuxième chambre (20) étant agencée au niveau d'un deuxième côté du diaphragme (17) ;
l'élément élastique (18) agit sur le deuxième côté du diaphragme (17) ;
la première chambre (19) est en communication fluidique avec le trajet de fluide (5) via le canal de piston ; et
la sortie de drain (27) est en communication fluidique avec la première chambre (19), et est positionnée de telle sorte que lorsque la sortie de drain (27) est ouverte, du fluide se draine du trajet de fluide (5), via le canal de piston et la première chambre (19), à travers la sortie de drain (27).

2. La soupape (1) selon la revendication 1, où la sortie de drain (27) comprend un canal de sortie de drain (27a) s'étendant à partir de la première chambre (19) et à travers le corps de soupape (2), où la fermeture de drain (28) est mobile à l'intérieur du canal de sortie de drain (27a) entre la position ouverte et la position fermée.

3. La soupape (1) selon la revendication 2, où le drain (26) comprend en outre un ou plus d'un organe de retenue (100) pour retenir la fermeture de drain (28) à l'intérieur de la sortie de drain (27).

4. La soupape (1) selon la revendication 3, où l'organe de retenue (100) empêche un mouvement de la fermeture de drain (28) au-delà de la position ouverte.

5. La soupape (1) selon n'importe laquelle des revendications 2 à 4, où la commande de différentiel de pression (9) est logée dans une portion inférieure du corps de soupape (2) et le canal de sortie de drain (27a) s'étend à partir d'un côté inférieur de la première chambre (19) jusqu'à un côté inférieur du corps de soupape (2).

6. La soupape (1) selon n'importe quelle revendication précédente, où le piston (16) est creux définissant le canal de piston entre le trajet de fluide (5) et la première chambre (19).

7. La soupape (1) selon n'importe quelle revendication précédente, où une ou plus d'une ouverture de sortie de drain (27b) est formée dans la fermeture de drain (28).

8. La soupape (1) selon la revendication 7, où la sortie de drain (27) comprend en outre un canal de sortie de drain (27a) pour guider du fluide de la première chambre (19) à l'une ou plus d'une ouverture de sortie de drain (27b).

9. La soupape (1) selon n'importe quelle revendication précédente, où la soupape (1) a un mode de fonctionnement de drainage en vertu duquel la sortie de drain (27) est ouverte.

10. La soupape (1) selon la revendication 9, où le mode de drainage est un mode de drainage vers l'avant en vertu duquel la soupape (1) est configurée pour permettre à du fluide de s'écouler en entrant par l'entrée de fluide (3) et en sortant par la sortie de drain ouverte (27) et/ou bien où le mode de drainage est un mode de drainage vers l'arrière en vertu duquel la soupape (1) est configurée pour permettre à du fluide de s'écouler en entrant par la sortie de fluide (4) et en sortant par la sortie de drain ouverte (27).

11. La soupape (1) selon la revendication 9, où le mode de drainage est un mode de drainage vers l'avant en vertu duquel la soupape (1) est configurée pour permettre à du fluide de s'écouler en entrant par l'entrée de fluide (3) et en sortant par la sortie de drain ouverte (27) ; et la soupape (1) comprend une fermeture de sortie de fluide pour fermer la sortie de fluide (4) lorsque la soupape (1) fonctionne dans le mode de drainage vers l'avant.

12. La soupape (1) selon la revendication 9, où le mode de drainage est un mode de drainage vers l'arrière en vertu duquel la soupape (1) est configurée pour permettre à du fluide de s'écouler en entrant par la sortie de fluide (4) et en sortant par la sortie de drain ouverte (27) ; et où la soupape (1) comprend une fermeture d'entrée de fluide pour fermer l'entrée de fluide (3) lorsque la soupape (1) fonctionne dans le mode de drainage vers l'arrière.

13. Un système de fluide comprenant :
une soupape de commande indépendante de la pression (1) telle que définie dans n'importe quelle revendication précédente ;
une première conduite de fluide couplée à l'entrée de fluide (3) de la soupape (1) ; et
une deuxième conduite de fluide couplée à la sortie de fluide (4) de la soupape (1).

14. Le système de fluide selon la revendication 13, comprenant en outre une fermeture de sortie de fluide pour fermer la sortie de fluide (4) lorsque la soupape (1) fonctionne dans le mode de drainage vers l'avant, où la fermeture de sortie de fluide est agencée dans la deuxième conduite de fluide ; et/ou comprenant en outre une fermeture d'entrée de fluide pour fermer l'entrée de fluide (3) lorsque la soupape (1) fonctionne dans le mode de drainage vers l'arrière, où la fermeture d'entrée de fluide est agencée dans la première conduite de fluide.

15. Un procédé de drainage d'une soupape de commande indépendante de la pression (1) selon n'importe lesquelles des revendications 1 à 12, comprenant l'étape consistant à :
configurer la fermeture de drain (28) sur la position ouverte de telle sorte que du fluide peut se drainer à travers la sortie de drain (27).
